**Europäisches Patentamt**

(19) **European Patent Office**

**Office européen des brevets**

(11) Veröffentlichungsnummer: **0 215 230**
**B1**

(12) **EUROPÄISCHE PATENTSCHRIFT**

(45) Veröffentlichungstag der Patentschrift:
**29.03.89**

(51) Int. Cl.⁴: **F 01 K 9/02,** F 01 K 21/06,
F 28 B 9/10, B 01 D 19/00

(21) Anmeldenummer: **86109757.4**

(22) Anmeldetag: **16.07.86**

(54) Einrichtung zum Entgasen des Kondesates im Kreislauf einer Stromerzeugungsanlage.

<table>
<tr><td>(30) Priorität: <b>20.09.85 CH 4097/85</b></td><td>(73) Patentinhaber: <b>BBC Brown Boveri AG, Haselstrasse, CH- 5401 Baden (CH)</b></td></tr>
<tr><td>(43) Veröffentlichungstag der Anmeldung:<br><b>25.03.87 Patentblatt 87/13</b></td><td>(72) Erfinder: <b>Blangetti, Francisco, Dr., Lindenhof 10, CH- 5430 Wettingen (CH)</b></td></tr>
<tr><td>(45) Bekanntmachung des Hinweises auf die Patenterteilung:<br><b>29.03.89 Patentblatt 89/13</b></td><td></td></tr>
<tr><td>(84) Benannte Vertragsstaaten:<br><b>BE CH DE FR GB IT LI NL SE</b></td><td></td></tr>
<tr><td>(56) Entgegenhaltungen:<br><b>EP-A-0 116 946<br>EP-A-0 134 457<br>EP-A-0 152 920<br>FR-A-2 229 031<br>US-A-3 327 774</b></td><td></td></tr>
</table>

## Beschreibung

Die Erfindung betrifft eine Einrichtung zum Entgasen des Kondensates im Kreislauf einer Stromerzeugungsanlage, die im Hauptkreis im wesentlichen aus Dampferzeuger, Turbine, Kondensator, Niederdruck- und Hochdruckvorwärmer und den erforderlichen Zirkulationspumpen besteht.

Im Speisewasser gelöster Sauerstoff, gelöstes Kupfer sowie weitere vom Speisewasser mitgeführte Korrosionsprodukte wurden als die Förderer der Korrosion in Dampferzeugern von Druckwasserreaktor-Anlagen identifiziert. Daher sind in jüngster Zeit grosse Bestrebungen im Gange, den Sauerstoffgehalt im Speisewasser möglichst tief zu halten, gelöstes Kupfer durch Ersatz aller Rohre aus Kupferlegierungen aus dem Speisewasserkreislauf zu eliminieren und Korrosionsprodukte vor dem Dampferzeuger auszuscheiden. Dies umso mehr, als der Ersatz der Dampferzeuger für ein Kraftwerk der 1000 MW-Klasse zu Kosten von ca. 100 Mio. $ führt. Eine Reduktion des Sauerstoffgehaltes im Speisewasser vermindert zudem die Korrosion des Speisewasserstranges und der Vorwärmer

Sauerstoff wird im Speisewasser resp. im Kondensat gelöst, wenn Luft mit dem Wasser in Berührung kommt. Dies ist z. B. der Fall:

- Beim Kaltstart einer Anlage, da vor dem Füllen mit Kondensat alle Anlageteile unter Luftdruck stehen, und durch die Anfahrevakuierung nicht alle Luft aus dem Speisewasser/Dampfkreislauf entfernt werden kann;

- bei Schwachlastbetrieb, da die Absaugekapazität der Vakuumpumpen für die einfallende Luft aus wirtschaftlichen Erwägungen und aus Gründen der Realisierbarkeit nicht so gross gewählt werden kann, dass alle Teile des Kondensatorbündels ausreichend mit Dampf gespült werden;

- bei normalem Lastbetrieb, weil trotz ausreichender Absaugekapazität die Luftkonzentration gegen das Ende der Kondensation, d. h. gegen den Luftkühler hin, so gross wird, dass messbare Sauerstoffkonzentrationen resultieren;

- weil auch bei normalem Lastbetrieb sehr viele Kondensator-Konzepte Zonen aufweisen, in denen es zu Luftansammlungen kommt;

- weil bei der Zusatzwasseraufbereitung das gereinigte entsalzte Zusatzwasser mit Luft durchwaschen wird, um Kohlendioxyd auszutreiben, und daher zu 100 % mit Luft gesättigt wird.

Kupfer wird z. B. bei Anwesenheit von Ammoniak und Sauerstoff aus den benetzten Metalloberflächen von Kupferlegierungen gelöst oder aber durch Erosion oder Korrosion dieser Metalloberflächen ins Speisewasser eingetragen. Korrosionsprodukte sowie weitere Verunreinigungen werden hauptsächlich bei Stillstandsperioden im Speisewasser angesammelt.

Die Fachwelt ist derzeit der Auffassung, dass ein maximaler Sauerstoffgehalt von ≤ 10 ppb (Teile pro Milliarde) über den gesamten Betriebsbereich der Anlage anstrebenswert ist.

In guten Kondensatoren, d. h. solchen mit nachgewiesener gure Entgasungsfähigkeit, wurden im Lastbereich zwischen 40 bis 100 % Sauerstoffgehalte von ≤ 5 ppb im Kondensat festgestellt. Das Zusatzwasser wird dabei im Kondensator selbst entgast. Beim Kaltstart einer solchen Anlage und im Schwachlastbetrieb wurden jedoch etwa 70 ppb im Hotwell des Kondensators gemessen. Diese Sauerstoffgehalte müssten weiter abgebaut werden.

Zur Lösung des Korrosionsproblems wurden am EPRI Kondensator-Seminar im Juni 1983 in Orlando, Florida folgende Vorschläge diskutiert:

a) Anfahrentgasung und Schwachlastentgasung durch Versprühung des rezirkulierten Speisewassers über die Rohre des Kondensators. Diese Idee führt erst dann zum Erfolg, wenn die verfügbare Saugerkapazität grösser als die für Sauerstoffgehalte von ≤ 10 ppb notwendige Saugerkapazität wird. Dies kann erst bei Lasten ab 30 bis 40 % erwartet werden. Denn Versprühung von aufgewärmtem Kondensat über die Bündel des Kondensators hat erst dann den gewünschten Effekt, wenn auf dem gesamten Weg dieses Kondensates keine Zonen grösserer Luftkonzentrationen durchlaufen werden. Eine Reinigung des gesamten Speisewasserkreislaufes ist durch die Kondensatrezirkulation ebenfalls nicht möglich.

b) Vergrösserung der Saugerkapazität im Schwachlastbereich durch Reduktion des Dampfgehaltes im Saugstrom mittels Mischkondensation. Mischkondensation kann jedoch nur einen Teil des Wasserdampfes aus dem Sauggemisch kondensieren, der Sauger muss immer noch alle Luft absaugen, was im allgemeinen erst bei Kondensatordrücken möglich ist, die über dem "Leerlaufdruck" des Kondensators liegen.

c) Nachentgasung des Kondensates im Hotwell durch Rieseleinbauten. Bei derartigen Rieselanlagen muss genügend Höhe für die Einbauten zur Verfügung stehen.

d) Nachentgasung des Kondensates im Hotwell durch Dampfeinblasen unter dem Wasserniveau. Für die Dampfeinblasung ist eine genügend grosse Kondensatüberdeckung sowie eine genügend feine Dampfverteilung im Kondensat erforderlich.

Eine Einrichtung der eingangs genannten Art ist bekannt aus der EP-A-0 152 920. Dort wird im Sammelgefäss des Kondensators mittels Wänden ein Strömungskanal für das Kondensat gebildet, in dem zwei Gruppen von Dampfeinführungen unterhalb des Wasserspiegels vorgesehen sind. Eine erste Gruppe befindet sich am Kanalanfang. Dort wird das Kondensat behandelt. Das dabei anfallende Dampf-Sauerstoff-Gemisch gelangt aus dem oben offenen Kanal in den Kondensationsraum, aus dem es abgezogen wird. Anschliessend strömt das Kondensat in den schikaneförmigen Strömungskanal, der nach oben abgeschlossen ist. Innerhalb des rundum geschlossenen Kanals befindet sich eine zweite Gruppe von Dampfeinführungen zur Nachentgasung des Kondensates. Das dort abgeschiedene Gemisch wird über eine unmittelbar oberhalb der Gruppe angeordnete Auslassöffnung in den Kondensationsraum abgezogen.

Bei einer andern, aus der EP-A-0 134 457 bekannten Einrichtung wird vor Aufnahme der Dampferzeugung in einer nuklear beheizten Stromerzeugungsanlage unterhalb des Wasserspiegels im Kondensatsammelgefäss ein Mittel zur Entgasung über Sprühdüsen in das Kondensat eingeführt. Dieses Mittel kann Speisewasser, Hilfsdampf oder ein Inertgas sein. Das Mittel steigt im Kondensat hoch und bildet in einer Entgasungskammer unter Verdrängung der darin befindlichen Luft ein Polster, welches der Sauerstoff-Entgasung förderlich ist. Der bei der Entgasung entstehende Dampf wird in einem Zusatzkondensator niedergeschlagen.

Der in den Patentansprüchen gekennzeichneten Erfindung liegt die Aufgabe zugrunde, die insbesondere durch Dampferzeuger-Korrosionsprobleme bedingte Kondensat- resp. Speisewasserentgasung vorgängig der normalen Betriebslast zu bewerkstelligen und für Teillast zu optimieren.

Mit der Erfindung wird damit eine besonders günstige Lösung gefunden, bei welcher die Zeit für die Entgasung vor dem Anlagenstart auf ein Minimum reduziert wird und bei welcher im gesamten Betriebsbereich entgastes Speisewasser bereitgestellt ist, ohne spürbare Verluste am Kondensatorvakuum in Kauf nehmen zu müssen.

In der Zeichnung ist ein Ausführungsbeispiel der Erfindung schematisch dargestellt.

Es zeigen:

Fig. 1     ein stark vereinfachtes Anlagenschema,

Fig. 2     einen Schnitt im vergrössertem Maßstab durch den Kondensator nach Linie A - A in Fig. 1.

Alle für das Verständnis der Erfindung unwesentlichen Anlageteile, wie beispielsweise der eigentliche Dampfkreis und die zahlreichen selbstverständlichen Absperrarmaturen in den Leitungen sind nicht gezeigt. Die Strömungsrichtung der diversen Medien ist jeweils mit Pfeilen angegeben.

Mit 1 sei ein nuklear beheizter Dampferzeuger bezeichnet. Im Normalbetrieb wird der darin produzierte Sattdampf in der nicht näher dargestellten Turbinenanlage 2 bis auf Kondensatordruck entspannt. Im Kondensator 3 wird der Dampf im Kondensationsraum 4 an den wassergekühlten Rohrbündeln 5 niedergeschlagen; das Kondensat wird im Kondensatsammelgefäss 6 aufgefangen. Eine Kondensatpumpe 8 fördert das Kondensat durch eine Kondensatsreinigungsanlage 9, von wo es über das Hotwell-Regelventil 10 in die Niederdruckvorwärmer 11 gelangt, von denen nur ein Exemplar symbolisch dargestellt ist. Für das vorliegende Beispiel wird ferner angenommen, dass es sich um eine Anlage ohne Mischvorwärmer und somit auch ohne die übliche Mischvorwärmer-Entgaserstufe handelt, eine Anlage demnach, wie sie häufig in den USA anzutreffen ist. Aus den Niederdruckvorwärmern fördert die Speisepumpe 12 das Speisewasser über die Hochdruckvorwärmer 13, von denen auch nur ein Exemplar dargestellt ist, zum Dampferzeuger 1.

Innerhalb der Rohrbündel 5 in der Kondensationszone sind die an sich bekannten Luftkühlerzonen 35 untergebracht, aus denen die nicht kondensierbaren Gase zusammen mit einem gewissen Dampfanteil über Entlüftungsleitungen 36 abgezogen werden. Dies geschieht mit der Vakuumpumpe 37. Vor letzterer ist ein zusätzlicher Kondensator 38 in der Entlüftungsleitung angeordnet, der mit Nebenkühlwasser 39 betrieben wird, das vorzugsweise kälter ist als das Hauptkühlwasser für den Kondensator 3. Entwässert wird dieser Zusatzkondensator 38 über ein Siphon 40 in den Hauptkondensator 3.

Das Kondensatsammelgefäss 6 ist vom Kondensationsraum 4 durch einen Zwischenboden 28 abgetrennt. Beide Räume sind durch eine Dampfausgleichsöffnung 29 miteinander verbunden. Das an den Rohrbündeln 5 entstehende Kondensat sammelt sich zunächst auf dem Zwischenboden 28 und fliesst dann über eine an die Wandung des Kondensators unmittelbar angrenzende, schlitzförmige Kondensatabflussöffnung 23 senkrecht abwärts ins Gefäss 6. Das Kondensat sammelt sich am Kondensatorboden, der mittels eines Wehrs 14 in ein grösseres Kompartiment 15 und ein kleineres Kompartiment 16 unterteilt ist. Das kleinere Kompartiment 16 ist der eigentliche Hotwell und ist mit dem Sumpf 17 versehen. Mit der Unterteilung und dem Überlauf werden zum einen strömungsgerechte Zustrombedingungen zur Kondensatpumpe 8 geschaffen und zum andern wird die Niveauregulierung im Hotwell nicht beeinträchtigt. Die Niveaudreiecke 7 und 7' bezeichnen den Wasserspiegel jeweils im eigentlichen Sammelgefäss resp. im Hotwell.

Der Hotwell ist über Begrenzungswände 18 und 19 gegen das grosse Kompartiment 15 abgeschottet. Die Begrenzungswände erstrecken sich vom Boden des Sammelgefässes bis zur Unterseite des Zwischenbodens 28.

Im grossen Kompartiment ist das Kondensat zwangsgeführt. Hierzu ist mit den Wänden 20, 21 und 22 ein eigentlicher Strömungskanal 24 gebildet, der am Wehr 14 endet. Die strömungsbegrenzenden Wände erstrecken sich ebenfalls vom Boden des Sammelgefässes bis zur Unterseite des Zwischenbodens 28. In diesem Kanal 24 wird die eigentliche Entgasung vorgenommen.

Die für eine bestmögliche Entgasung günstigsten Abmessungen seien anhand eines Zahlenbeispieles erläutert: Das Wehr ist so bemessen, dass die Wasserhöhe im Strömungskanal und damit im Sammelgefäss ca. 1000 mm beträgt. Die Gesamthöhe zwischen Kondensatorboden und Zwischenboden beträgt ca. 1400 mm, so dass zwischen Wasserniveau 7, Zwischenboden 28 und Wänden eine rundum geschlossene Spüldampfkammer 25 mit 400 mm lichter Höhe entsteht.

Im Bereich des Einlaufes des Strömungskanals ist die bereits genannte Dampfausgleichsöffnung 29 im Zwischenboden 28 vorgesehen. In Abweichung zur dargestellten Konfiguration, bei welcher der Zwischenboden 28 unterhalb der ganzen berohrten Kondensationszone verläuft - um zu vermeiden, dass sich das aus den Bündeln niederregnende Kondensat mit dem weitgehend entgasten Kondensat im Sammelgefäss vermischt - kann auch lediglich der Strömungskanal überdacht sein. Auf die über die ganze Kondensatorbreite verlaufende Kondensatabflussrinne 23 kann dann verzichtet werden und es bietet sich an, die Dampfausgleichsöffnung 29 mit der Abflussrinne für das Kondensat in einem gemeinsamen Apparat zu kombinieren.

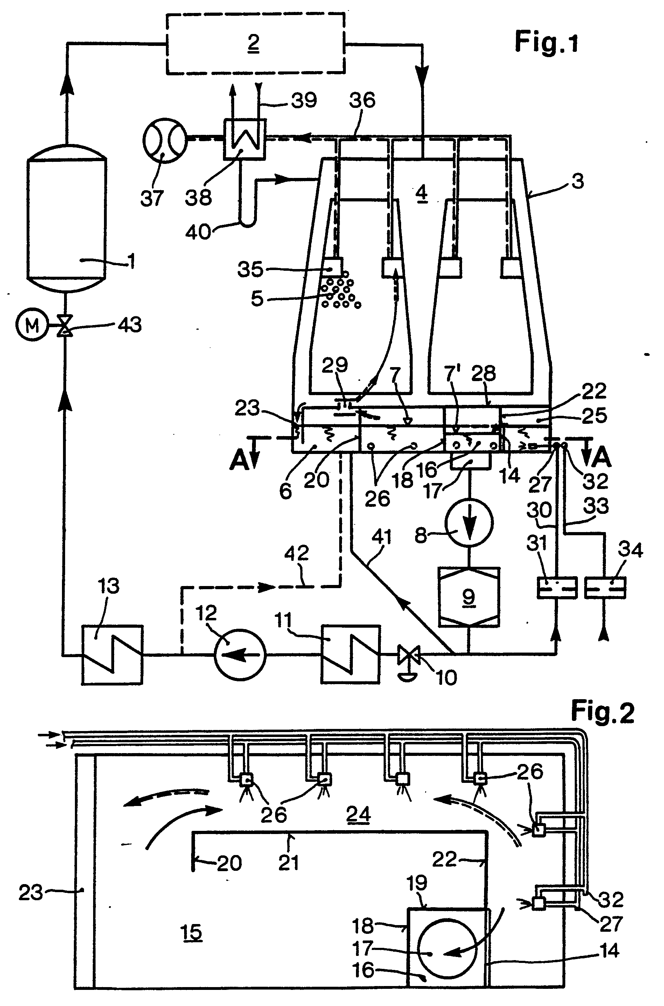

Im dargestellten Fall ist die Öffnung 29 als Kamin ausgebildet (Fig. 1). Gegen herabtropfendes Kondensat ist sie nach oben hin durch eine Platte geschützt; von der Dampfströmung in der Kammer 44 mitgerissenes Kondensat wird an einer unteren Prallplatte abgeschieden.

Die umgewälzte Kondensatminimalmenge der betrachteten typischen Anlage betrage ca. 40 kg/sec. Um zwecks optimaler Entgasung im Strömungskanal eine Kondensatgeschwindigkeit von 0,2 m pro Sekunde zu erzielen, wird die Kanalbreite entsprechend gewählt.

Die eigentliche Entgasung erfolgt mittels Dampfblasen, die in Dampfzerteilungsmitteln 26 erzeugt werden. Diese Mittel sind vorzugsweise handelsübliche Zweiphasendüsen, die sowohl mit Flüssigkeit als auch mit Dampf beaufschlagt werden. Sie sind so bemessen, dass sich an der Austrittsmündung Dampfblasen mit einem Durchmesser von ca. 1 mm bilden. Geeignet sind grundsätzlich Dampfblasen mit einem Durchmesser zwischen 0,5 und 2 mm.

Im Strömungskanal 24 ist eine Mehrzahl dieser Düsen angeordnet im Abstand von etwa 800 bis 1000 mm. In Strömungsrichtung des Kondensats sind sie hintereinander angeordnet, beginnend im Einströmbereich und endend im Bereich des Wehrs 14. Die Düsen sind in einer Tiefe zwischen 500 und 1000 mm, vorzugsweise ca. 900 mm unterhalb des Wasserniveaus 7 befestigt. Ihre Austrittsmündung ist jeweils horizontal gerichtet, unter anderem, um die Verweilzeit beim Aufsteigen durch das Kondensat zu verlängern.

Die Anspeisung der einzelnen Düsen erfolgt über ein umlaufendes Doppelrohr, dessen Wasserrohr 27 über eine Leitung 30 vom Speisewasserstrang - und zwar vorteilhafterweise hinter der Kondensatpumpe 8 - abzweigt. Im vorliegenden Fall geschieht dies zwischen dem Hotwellregelventil 10 und der Kondensatreinigungsanlage 9, so dass jeweils gereinigtes Wasser zur Anwendung gelangt. In der Wasserleitung 30 ist ein Drosselorgan 31 angeordnet, um den herrschenden Wasserdruck auf den für die Blasenerzeugung erforderlichen Druck vor Düse herab zu drosseln. Das Dampfrohr 32 des umlaufenden Doppelrohres ist an eine Dampfleitung 33 entsprechenden Druckes angeschlossen, wobei der Druck ebenfalls in einem Reduzierorgan 34 bereitgestellt wird. Die Dampfquelle selbst kann mehrfacher Art sein. So kann beispielsweise das vor der eigentlichen Dampferzeugung im Kessel 1 bereits aktive Hilfsdampfsystem (nicht dargestellt) angezapft werden, welches für die Bereitstellung von Konservierungsdampf und/oder Stopfbüchsendampf erforderlich ist. Andere mögliche Dampfquellen sind Frischdampf oder Anzapfdampf aus der Turbinenanlage 2, wobei lediglich darauf zu achten ist, dass jeweils sauerstoffarmer Dampf eingesprüht wird.

Das Entgasungsverfahren wird nunmehr anhand des Anfahrvorgangs der Anlage beschrieben. Es wird dabei angenommen, dass die Anlage vollständig gefüllt ist, d. h. die ganze Vorwärmerstrasse ist bis unmittelbar vor die verschlossene Dampferzeuger-Isolierarmatur 43 aufgefüllt. Die Kondensatpumpe wälzt nun über die Mindestmengenleitung 41 mit der Kondensatpumpen-Mindestmenge, d. h. etwa 20 % der Nennlastmenge, das Wasser um. Dadurch, dass die gesamte Wassermenge die Kondensatreinigungsanlage 9 wiederholt beaufschlagt, genügen etwa 10 Umläufe, um die Korrosionsprodukte auszuscheiden, die sich im Speiserwasserkreislauf vor den Niederdruckvorwärmern 11 insbesondere während der Stillstandperiode der Anlage gebildet und angesammelt haben.

Wenn nun zwar vom Standpunkt der Reinheit das Speisewasser die erforderliche Qualität aufweist, so hat es sich doch während der mehrfachen Zirkulation mit Sauerstoff angereichert, da anlässlich der Anfahrevakuierung nicht alle Luft aus dem Kreislauf entfernt werden kann.

Die eigentliche thermische Entgasung, bewirkt durch Energiezufuhr in das Kondensat, kann nun erfolgen. Hierzu werden die Zweiphasendüsen 26 gleichzeitig mit Wasser und Dampf aus den Rohren 27 resp. 32 angespeist. Der Druck vor Düse beträgt je nach verwendetem Typ zwischen 1,5 bis 2,5 bar. Durch den in den Sprühdüsen erfolgenden Druckabbau verdampft der Teil des eingeführten Kondensates und bildet zusammen mit dem eingeführten Dampf die Dampfblasen vom gewünschten Durchmesser, die homogen durch das Kondensat aufsteigen.

Es sei nochmals daran erinnert, dass für die vorgegebene Wassertiefe ein Blasendurchmesser von ca. 1 mm optimal ist, da einerseits dann die Verweilzeit nicht lang genug ist, um Blasen durch den Sumpf 17 aus dem Kondensator herauszuführen, andererseits jedoch lang genug ist, um die erforderliche Sauerstoffdesorption durchzuführen. Die Kinematik dieser Sauerstoffdesorption ist hinlänglich bekannt und es braucht hier nicht darauf eingegangen zu werden.

Der eigentliche Dampfverbrauch für die Blasenbildung ist relativ gering. Das Massenverhältnis Dampf/Wasser bewegt sich in der Grössenordnung 0,015 bis 0,025. Bei der Entgasung von ca. 40 kg/sec Kondensat entspricht dies einem Verbrauch von etwa sekundlich 7 bis 8 gr Dampf.

Gelangen die Blasen nach einer Verweilzeit zwischen 5 und 10 sec an die Wasseroberfläche, so wird in der Spüldampfkammer 25 ein Dampfpolster geschaffen, welches die bis dahin verbliebene Luft über die Dampfausgleichsöffnung 29 verdrängt. Zusammen mit der Kondensatorentlüftung wird der über die Öffnung 29 abströmende Dampf abgezogen und im Zusatzkondensator 38 niedergeschlagen.

Hier zeigt sich nun der besondere Vorteil der neuen Gegenstromanordnung. Das Kondensat, welches in Richtung Sumpf 17 strömt, wird mehrfach hintereinander mit Dampfblasen bearbeitet, wodurch sein Sauerstoffgehalt sukzessive abnimmt. Hingegen enthält der aus dem Kondensat entweichende und in der Kammer 25 ebenfalls zwangsgeführte Spüldampf im Bereich des Sumpfes 17 die geringste Sauerstoffkonzentration. Im Verlauf seiner Abströmung steigert sich der Sauerstoffgehalt im Spüldampf zunehmend und erreicht seinen Höchstwert vor der ersten Düse 26 im Bereich der Ausgleichsöffnung 29.

Wenn die Speisewasser-Entgasung auf das erforderliche Niveau erfolgt ist, beispielsweise einen Sauerstoffgehalt geringer als 10 ppb aufweist, was durch einfache Messung im oder nach dem Kondensatsammelgefäss 6 nachzuweisen ist, ist die primäre Reinigungs- und Entgasungsphase damit beendet. Es folgt die Füllung des Dampferzeugers 1 mit anschliessender Dampferzeugung.

Die Hochlaufphase beim Anlagenstart und die hierfür erforderliche Umgehung der Turbine sind erfindungsunwesentlich und können im vorliegenden Zusammenhang unberücksichtigt bleiben.

Es wird nunmehr angenommen, dass eine gewisse Teillast gefahren wird. Zur Kondensation wird nunmehr gerade die unbedingt erforderliche Kühlwassermenge zirkulieren lassen. Vorzugsweise wird bis zu einer bestimmten Teillast nur ein Teil, beispielsweise eine Hälfte des Kondensators in Betrieb genommen. In diesem Stadium ist nämlich im Kondensationsraum 4 ein möglichst hoher Druck erwünscht, um die Saugkapazität der Vakuumpumpe 37 voll zu erhalten und auszunützen. Dies bedeutet, dass im Kondensationsraum der einströmende Dampf nicht vollständig auskondensiert, sondern den Raum füllt und hierbei die noch vorhandene Luft verdrängt. Das über die Entlüftungsleitungen 36 abgezogene Luftdampfgemisch durchströmt zunächst den Zusatzkondensator 38, der wie bereits erwähnt mit Nebenkühlwasser 39 betrieben wird, das vorzugsweise von tieferer Temperatur ist als das Hauptkühlwasser. Durch die Reduktioin seines Dampfgehaltes im Zusatzkondensator wird die Entlüftungskapazität der Vakuumpumpe wirkungsvoll vergrössert. Dies ist insbesondere deshalb vorteilhaft, weil die Vakuumpumpe bei Schwachlastbetrieb in der Regel eine ungenügende Saugleistung aufweist. Das im Zusatzkondensator 38 niedergeschlagene Kondensat wird in den Hauptkondensator zurückgeführt; in der dafür vorgesehenen Leitung ist infolge des Druckunterschiedes zwischen Zusatzkondensator 38 und Kondensationsraum 4 der Siphon 40 angeordnet.

In der soeben beschriebenen Betriebsphase enthalten die Rohrbündel 5 indes weiterhin Luftfelder, in denen das entstehende Kondensat mit Sauerstoff angereichert wird, weil die Saugkapazität immer noch nicht ausreicht. Infolgedessen bedarf es einer Nachentgasung, die auf die gleiche Art im Sammelgefäss vorgenommen wird. Hierzu kann zweckmässigerweise Frischdampf oder Anzapfdampf in die Dampfleitung 32 eingeleitet werden.

Es ist zweckmässig, dass die Nachentgasung bis zu etwa 40 % der Last in Betrieb bleibt, solange also, bis die Vakuumpumpe 37 von selbst fähig ist, Luftansammlungen zu vermeiden. Bei schlechten Kondensatorkonzepten allerdings, die auch im normalen Lastbetrieb Zonen mit unvermeidlichen Lufttaschen aufweisen, wird man um einen permanenten Nachentgasungsbetrieb nicht herumkommen. Dass die hierfür benötigte Dampfmenge nicht für die Entspannung in der Turbine oder für die Vorwärmung zur Verfügung steht, sei nur nebenbei erwähnt.

Selbstverständlich ist die Erfindung nicht auf die gezeigte und beschriebene Anwendung beschränkt. So könnte in Abweichung von der beschriebenen horizontalen Dampfblaseneindüsung auch ein senkrechtes Einblasen berücksichtigt werden, falls die dann erforderliche Wassertiefe vorliegt. Dies könnte bei Anlagen der Fall sein, in denen für die Entgasung ein getrenntes Modul verwendet wird, weil beispielsweise infolge Raumzwang nicht ausreichend Platz über dem Kondensatorboden vorhanden ist. Strömungskanäle in Mäanderform sind inbesondere bei sogenannten Überfluranordnungen denkbar, bei denen der Kondensatorboden selbst als niveaugeregelter Hotwell dient. Abweichend zum Beschriebenen kann anlässlich der Primärentgasung das Kondensat mit der Mindestmenge der Speisepumpe 12 über die (gestrichelte) Leitung 52 zirkuliert werden. Hierdurch werden auch jene Korrosionsprodukte in der Kondensatreinigungsanlage 9 ausgeschieden, die sich in den Niederdruckvorwärmern 11 angesammelt haben.

Schliesslich wäre noch denkbar, die Rezirkulation für die Primärentgasung über eine Leitung durchzuführen, die zwischen Hochdruckvorwärmer 13 und Isolierarmatur 43 abzweigt. Damit könnten sämtliche Verunreinigungen aus dem Vorwärmerstrang entfernt werden.

## Patentansprüche

1. Einrichtung zum Entgasen des Kondensates im Kreislauf einer Stromerzeugungsanlage, die im Hauptkreis im wesentlichen aus Dampferzeuger (1), Turbine (2), Kondensator (3), Niederdruck- und Hochdruckvorwärmer (11, 13) und den erforderlichen Zirkulationspumpen (8, 12) besteht, wobei im Sammelgefäss (6) des Kondensators (3) mittels Wänden (20, 21, 22), die sich über die ganze Höhe des Sammelgefässes (6) erstrecken, ein Strömungskanal (24) für das zur Kondensatpumpe (8) abfliessende Kondensat gebildet ist, und wobei in diesem Strömungskanal (24) Dampfzerteilungsmittel (26) unterhalb des Wasserspiegels (7) angeordnet sind, dadurch gekennzeichnet, dass die Dampfzerteilungsmittel (26) im Strömungskanal (24) zueinander beabstandet sind, und dass oberhalb des Wasserspiegels (7) im Strömungskanal (24) eine rundum geschlossene Spüldampfkammer (25) vorgesehen ist, welche über eine Dampfausgleichsöffnung (29) mit dem Kondensationsraum (4) des Kondensators (3) kommuniziert, wobei die Dampfausgleichsöffnung (29) im Einströmbereich des Strömungskanals (24) angeordnet ist.

2. Einrichtung nach Anspruch 1, dadurch gekennzeichnet, dass die Dampfzerteilungsmittel Zweiphasendüsen sind, die sowohl von sauerstoffarmen Dampf als auch von rezirkuliertem Kondensat beaufschlagt sind.

3. Einrichtung nach Anspruch 2, dadurch gekennzeichnet, dass die Zweiphasendüsen mindestens 500 mm, vorzugsweise ca. 900 mm unterhalb des Wasserspiegels (7) im Sammelgefäss (6) angeordnet und mit horizontaler Austrittsmündung ausgerichtet sind.

4. Einrichtung nach Anspruch 2, dadurch gekennzeichnet, dass die Zweiphasendüsen zur Erzeugung von Dampfblasen mit Durchmesser 0,5 bis 2 mm, vorzugsweise 1 mm bemessen sind.

## Claims

1. A device for degassing the condensate in the cycle of an electricity generating plant whose main cycle consists essentially of steam generator (1), turbine (2), condenser (3), low pressure and high pressure preheaters (11, 13) and the necessary circulating pumps (8, 12), a flow channel (24) for the condensate flowing away to the condensate pump (8) being formed in the collecting vessel (6) of the condenser (3) by means of walls (20, 21, 22) which extend over the complete height of the collecting vessel (6), and steam spraying means (26) being located below the water level (7) in this flow channel (24), characterized in that the steam spraying means (26) are spaced from one another in the flow channel (24), and in that a peripherally closed flushing steam chamber (25) is provided above the water level (7) in the flow channel (24), which flushing steam chamber communicates via a steam balance opening (29) with the condensation space (4) of the condenser (3), the steam balance opening (29) being located in the inlet flow region of the flow channel (24).

2. A device according to claim 1, characterized in that the steam spraying means are two-phase nozzles, which are subjected to both low oxygen steam and recirculated condensate.

3. A device according to claim 2, characterized in that the two-phase nozzles are located at least 500 mm, preferably about 900 mm, below the water level (7) in the collecting vessel (6) and are directed so that their outlets are horizontal.

4. A device according to claim 2, characterized in that the two-phase nozzles are dimensioned for generating steam bubbles with diameters of 0.5 to 2 mm, preferably 1 mm.

## Revendications

1. Dispositif de dégazage du condensat dans le circuit d'une unité de production d'électricité, qui dans son circuit principal se compose essentiellement d'un générateur de vapeur (1), d'une turbine (2), d'un condenseur (3), de réchauffeurs à basse et à haute pression (11, 13) et des pompes de circulation (8, 12) nécessaires, dans lequel un canal d'écoulement (24) pour le condensat s'écoulant vers la pompe à condensat (8) est formé dans le récipient (6) de collecte du condenseur (3) au moyen de parois (20, 21, 22) qui s'étendent sur toute la hauteur du récipient de collecte (6), et dans lequel des moyens (26) de pulvérisation de la vapeur sont disposés sous le niveau de l'eau (7) dans ce canal d'écoulement (24), caractérisé en ce que les moyens (26) de pulvérisation de la vapeur sont espacés l'un de l'autre dans le canal d'écoulement (24), et en ce qu'au-dessus du niveau de l'eau (7) dans le canal d'écoulement (24) il est prévu une chambre fermée (25) de vapeur de balayage, qui communique avec la chambre de condensation (4) du condenseur (3) par une ouverture (29) d'équilibrage de la vapeur, l'ouverture (29) d'équilibrage de la vapeur étant située dans la région de l'entrée du canal d'écoulement (24).

2. Dispositif suivant la revendication 1, caractérisé en ce que les moyens de pulvérisation de la vapeur sont des gicleurs à deux phases, qui sont alimentés aussi bien avec de la vapeur pauvre en oxygène qu'avec du condensat recyclé.

3. Dispositif suivant la revendication 2, caractérisé en ce que les gicleurs à deux phases sont disposés à au moins 500 mm, de préférence à environ 900 mm sous le niveau de l'eau (7) dans le récipient de collecte (6) et en ce qu'ils sont orientés avec leur embouchure horizontale.

4. Dispositif suivant la revendication 2, caractérisé en ce que les gicleurs à deux phases sont dimensionnés pour produire des bulles de vapeur d'un diamètre de 0,5 mm à 2 mm, de préférence de 1 mm.

**Fig.1**

**Fig.2**